# EUROPÄISCHE PATENTSCHRIFT

(11) **EP 0 952 048 B1**
(45) Veröffentlichungstag und Bekanntmachung des Hinweises auf die Patenterteilung: **09.07.2003**
(21) Anmeldenummer: 99107349.5
(22) Anmeldetag: 21.04.1999
(51) Int. Cl.: B60R 22/36

(54) **Gurtaufroller für ein Sicherheitsgurt-Rückhaltesystem**
Seat belt retractor for a safety belt restraint system
Enrouleur de ceinture de sécurité pour un système de retenue

(30) Priorität: 23.04.1998 DE 29807433 U
(43) Veröffentlichungstag der Anmeldung: 27.10.1999
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Kitzhofer, Thomas, Dipl.-Ing.

(56) Entgegenhaltungen:
- EP-A- 0 631 911
- EP-A- 0 638 467
- DE-A- 4 232 237
- DE-B- 1 163 684
- DE-U- 9 413 087
- US-A- 3 632 058
- US-A- 5 529 259

## Beschreibung

Die Erfindung betrifft einen Gurtaufroller für ein Sicherheitsgurt-Rückhaltesystem nach dem Oberbegriff des Anspruchs 1.

Ein gattungsgemäßer Gurtaufroller ist aus der DE-A-42 32 237 bekannt.

Die Sperrklinke des Gurtaufrollers dient dazu, die Gurtspule im Rahmen im Bedarfsfall zu blockieren, so daß der auf der Gurtspule aufgenommene Sicherheitsgurt nicht weiter vom Gurtaufroller abgezogen werden kann. Die Sperrklinke ist am Rahmen üblicherweise mittels Lagerzapfen gelagert, die einstückig mit der Sperrklinke ausgebildet sind. Die hohen Lasten, die bei blockierter Gurtspule von der Sperrverzahnung über die Sperrklinke in den Rahmen eingeleitet werden, werden jedoch nicht von dem Lagerzapfen übertragen; diese Kräfte werden durch Anlage des von der Sperrverzahnung abgewandten Endes der Sperrklinke am Rahmen in diesen eingeleitet.

Die DE 94 13 087 U1 zeigt eine Blockierklinkenanordnung eines Gurtaufrollers mit zwei Blockerklinken, die durch einen Verbindungsstift in Form eines länglichen, rohrförmig gefalteten Blechs aneinander gekoppelt sind.

Die Aufgabe der Erfindung besteht darin, einen Gurtaufroller zu schaffen, bei dem die Lagerung der Sperrklinke kostengünstiger erzielt wird.

Die Aufgabe wird durch einen Gurtaufroller nach Anspruch 1 gelöst.

Mit dem Gurtaufroller nach der Erfindung läßt sich eine Reihe von Vorteilen erzielen. Die Sperrklinke selbst ist ein im wesentlichen zweidimensionales Teil. Dies ermöglicht, die Sperrklinke beispielsweise als Profilteil auszubilden, also ausgehend von einem Stab, dessen Außenumfang der Außenkontur der Sperrklinke entspricht und der in eine Vielzahl von Scheiben zerschnitten wird, die jeweils eine Sperrklinke bilden. Alternativ ist auch möglich, die Sperrklinke als Druckgußteil auszuführen. In jedem Fall wird der Drahtstift als getrenntes Teil in die Sperrklinke eingesetzt. Die Sperrklinke ist auf den Drahtstift aufgepreßt oder der Drahrstift in die Bohrung der Sperrklinke eingepreßt. Dies ermöglicht es, die Sperrklinke mittels eines besonders einfachen Bearbeitungsschrittes mit dem Drahtstift zu verbinden. Vorzugsweise kann vorgesehen sein, daß der Drahtstift im Bereich der Bohrung der Sperrklinke mit axialen Rillen versehen ist. Dies erhöht die Haltekraft des Drahtstifts in der Bohrung der Sperrklinke.

Wenn gemäß einer möglichen Ausführungsform nur eine einzige Sperrklinke verwendet wird, um die Gurtspule zu blockieren, steht der Drahtstift über die beiden Außenflächen der Sperrklinke hervor. Dies ermöglicht es, die Sperrklinke präzise am Rahmen zu lagern.

Wenn gemäß einer möglichen anderen Ausführungsform zwei Sperrklinken verwendet werden, die in zwei voneinander getrennte Sperrverzahnungen eingesteuert werden können, die jeweils an einem axialen Ende der Gurtspule angeordnet sind, kann sich der Drahtstift durchgehend von der einen Sperrklinke zur anderen erstrecken, wobei er über die voneinander abgewandten Außenflächen der Sperrklinken hervorsteht. Die Sperrklinken können dann mittels der beiden Enden des Drahtstifts präzise gelagert werden, wobei der Drahtstift zusätzlich zur Übertragung der Einsteuerbewegung einer Sperrklinke in die Sperrverzahnung zur anderen Sperrklinke dienen kann. Es wird nämlich üblicherweise nur ein auf einer Seite des Gurtaufrollers angeordneter Sperrmechanismus verwendet, der die Einsteuerbewegung der Sperrklinken auf einer Seite des Rahmens einleitet.

Es ist alternativ auch möglich, daß die Bohrung profiliert ausgebildet ist und der Drahtstift im Bereich der Bohrung mit einem komplementären Profil versehen ist. Auf diese Weise wird eine formschlüssige Verbindung zwischen dem Drahtstift und der Sperrklinke erzielt, was insbesondere von Vorteil ist, wenn zwei Sperrklinken auf einem Drahtstift verwendet werden, die beide mittels eines nur einseitig wirkenden Sperrmechanismus in die Sperrverzahnungen der Gurtspule eingesteuert werden müssen.

Gemäß einer bevorzugten Ausführungsform der Erfindung ist vorgesehen, daß das von der Sperrverzahnung abgewandte Ende der Sperrklinke mit einer Ausnehmung versehen ist, in die ein Steg des Rahmens eingreift. Diese Gestaltung gewährleistet, daß die Sperrklinke auch dann, wenn sie hohe Lasten von der Gurtspule in den Rahmen einleitet, sicher und zuverlässig im Rahmen abgestützt ist, ohne daß sie verrutschen kann.

Gemäß einer möglichen Weiterbildung kann auf der Außenseite des Rahmens eine Führungsplatte angeordnet sein, die zusammen mit einem Bund, der einen für die Aufnahme des Sicherheitsgurtes vorgesehenen Bereich der Gurtspule von der Sperrverzahnung trennt, die Sperrklinke führt. Die Führungsplatte unterstützt die präzise Führung der Sperrklinke, so daß diese unter allen Umständen präzise in die Sperrverzahnung eingesteuert werden kann.

Vorzugsweise hat der Gurtaufroller zwei Sperrklinken, die aus unterschiedlichen Materialien vorgesehen sind. Eine Sperrklinke sollte dabei aus Leichtmetall wie zum Beispiel Aluminium oder Magnesium, und die andere aus Stahl oder Zinkdruckguß, also einem extrem stabilen Werkstoff sein. Üblicherweise sind bisher die Klinken immer aus Stahl ausgebildet gewesen, was aber das Gewicht und die Trägheit beim Einsteuern erhöht. Wenn eine Klinke aus leichterem Material besteht, kann die träge Masse der Einheit bestehend aus Sperrklinken und Lagerzapfen deutlich reduziert werden.

Vorteilhafte Ausgestaltungen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigen:
- Figur 1 eine schematische Seitenansicht eines erfindungsgemäßen Gurtaufrollers;
- Figur 2 eine schematische Seitenansicht eines erfindungsgemäßen Gurtaufrollers gemäß einer Weiterbildung;
- Figur 3 eine Draufsicht auf die in Figur 2 sichtbare Seite des Gurtaufrollers entlang dem Pfeil III von Figur 2;
- Figur 4 eine Schnittansicht entlang der Ebene IV-IV von Figur 2;
- Figur 5 eine Seitenansicht einer Sperrklinke für einen erfindungsgemäßen Gurtaufroller gemäß einer zweiten Weiterbildung;
- Figur 6 eine schematische Draufsicht auf ein Sperrklinkenpaar für einen Gurtaufroller gemäß der zweiten Weiterbildung;
- Figur 7 eine schematische, teilgeschnittene Seitenansicht eines erfindungsgemäßen Gurtaufrollers gemäß einer dritten Weiterbildung;
- Figur 8 eine schematischen Draufsicht mit Auslassungen auf den Gurtaufroller von Figur 7; und
- Figur 9 eine schematische Seitenansicht des Gurtaufrollers von Figur 7.

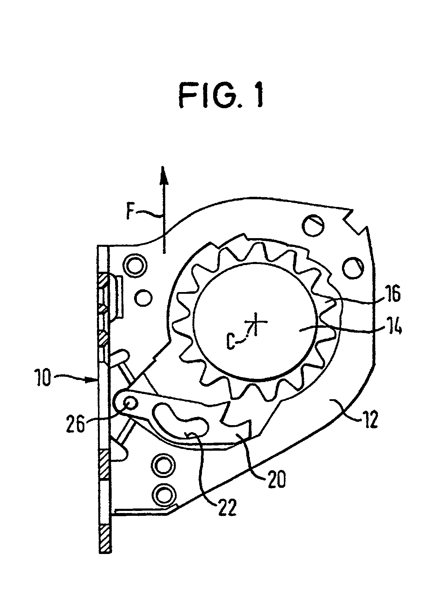

In Figur 1 ist schematisch ein erfindungsgemäßer Gurtaufroller 10 gezeigt. Dieser enthält einen Rahmen 12, in welchem drehbar eine Gurtspule 14 gelagert ist. Die Gurtspule 14 ist an ihrem in Figur 1 sichtbaren axialen Ende mit einer Sperrverzahnung 16 versehen. Die Gurtspule 14 kann einen lediglich durch seine Abwickelrichtung F angedeuteten Sicherheitsgurt aufnehmen.

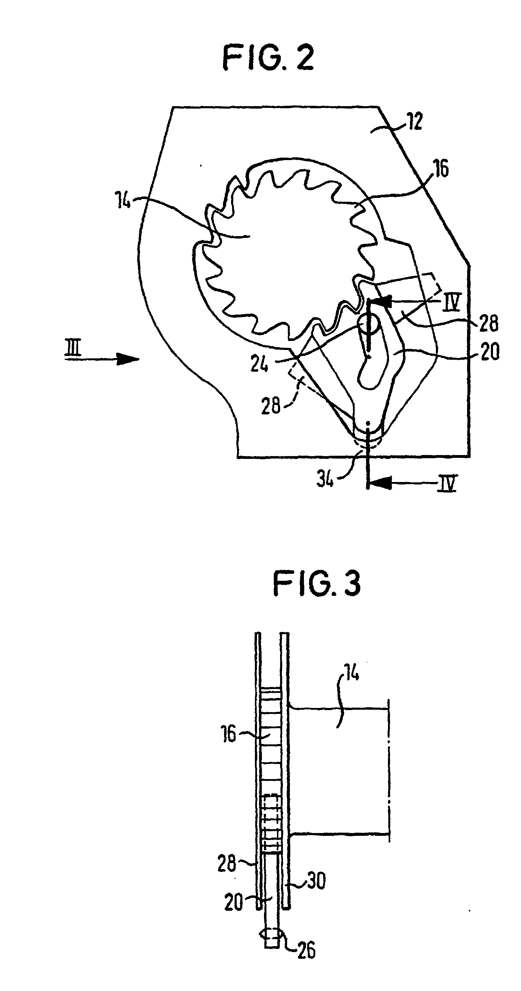

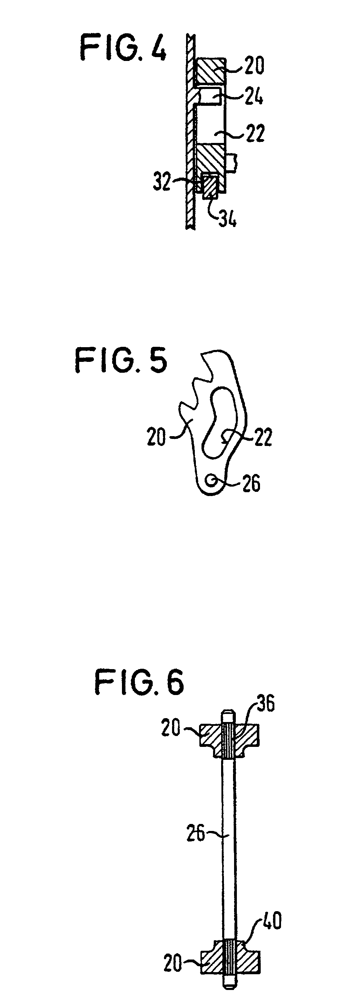

Am Rahmen 12 ist eine Sperrklinke 20 angebracht, die mit einer Steuerausnehmung 22 versehen ist. In die Steuerausnehmung 22 kann ein Steuerfortsatz 24 (siehe Figuren 2 und 4) eingreifen, der Teil eines in den Figuren nicht dargestellten Sperrmechanismus ist. Dieser Sperrmechanismus, der herkömmlich ausgebildet ist, dient dazu, die Sperrklinke 20 entweder gurtband-sensitiv oder fahrzeug-sensitiv in die Sperrverzahnung 16 einzusteuern und dadurch die Gurtspule 14 zu blockieren, so daß der Sicherheitsgurt nicht weiter von der Gurtspule 14 abgezogen werden kann. Die Sperrklinke 20 ist ein Zink-Druckgußteil, ein Aluminium-Druckgußteil oder aus einem Aluminiumprofil gefertigt. Ferner kann es auch aus Magnesium oder Stahl sein.

Die Sperrklinke 20 ist mit einem Lagerzapfen 26 versehen, der in entsprechenden Ausnehmungen aufgenommen wird, die in Kunststoffplatten vorgesehen sein können, die am Rahmen 12 befestigt werden. Wie insbesondere in Figur 3 zu sehen ist, steht der Lagerzapfen 26 über die beiden Außenflächen der Sperrklinke 20 hervor. Der Lagerzapfen ist gebildet durch einen verzinkten Drahtstift, der in eine Bohrung in der Sperrklinke 20 so eingesetzt ist, daß er mit seinen beiden axialen Enden über die Außenfläche der Sperrklinke hervorsteht. Der Drahtstift 26 wird in der Bohrung in der Sperrklinke 20 entweder gehalten, indem zwischen der Bohrung und dem Drahtstift eine Preßpassung vorgesehen ist, so daß der Drahtstift in die Sperrklinke hineingepreßt werden muß, oder indem das mit der Bohrung versehene Ende der Sperrklinke auf den Drahtstift aufgepreßt wird, nachdem dieser in die Bohrung eingesetzt wurde.

Zur besseren Führung ist am Rahmen eine Führungsplatte 28 vorgesehen, die zusammen mit einem Bund 30, der einen für die Aufnahme des Sicherheitsgurtes vorgesehenen Bereich der Gurtspule von deren Sperrverzahnung 16 trennt, die Sperrklinke 20 in bezüglich des Lagerzapfens 26 axialer Richtung führt.

Wie in Figur 4 zu sehen ist, ist das von der Sperrverzahnung 16 abgewandte Ende der Sperrklinke mit einer Ausnehmung 32 versehen, in die ein Steg 34 des Rahmens 12 eingreift. Dies gewährleistet, daß die Sperrklinke auch bei hohen Belastungen sicher im Rahmen abgestützt ist.

In den Figuren 5 und 6 ist ein Sperrklinkenpaar gezeigt, das bei einem erfindungsgemäßen Gurtaufroller gemäß einer zweiten Weiterbildung verwendet wird. In diesem Fall ist der Gurtaufroller mit einer Sperrverzahnung 16 an jedem axialen Ende der Gurtspule 14 versehen. In diese Sperrverzahnung wird jeweils eine Sperrklinke 20 eingesteuert. Um beide Sperrklinken 20 gleichzeitig in die Sperrverzahnungen einzusteuern, sind diese mittels des Drahtstiftes 26 drehfest miteinander verbunden. Der Drahtstift 26 steht über die voneinander abgewandten Außenflächen der Sperrklinken 20 hervor, so daß auch hier entsprechende Lagerzapfen gebildet sind. Der Drahtstift 26 ist im Bereich der Bohrungen der Sperrklinken 20 mit axialen Rillen 36 versehen, so daß die Verdrehsicherheit der Sperrklinken 20 auf dem Drahtstift 26 gewährleistet ist. Alternativ wäre auch möglich, die Bohrung in dem Sperrklinken und dem Drahtstift profiliert auszuführen, so daß eine formschlüssige Verbindung gebildet ist. Der Drahtstift 26 hat einen vergleichsweise kleinen Durchmesser in der Größenordnung von etwa 3 mm, so daß er den für die Aufnahme des Sicherheitsgurtes auf der Gurtspule 14 zur Verfügung stehenden Raum nicht beeinträchtigt.

Von den beiden Sperrklinken 20 ist eine aus einem Material mit geringerem spezifischen Gewicht gefertigt, vorzugsweise aus Aluminium oder Magnesium. Die andere Sperrklinke hingegen ist aus Zink-Druckguß. Beim Einsteuern der leichteren Sperrklinke aus Aluminium oder Magnesium kann diese durchaus geringfügig im Bereich der eingesteuerten Zähne verformt werden. Der gesamte Sperrmechanismus ist aber trotzdem funktionsfähig, da die andere, stabilere Klinke, mehr Last aufnehmen kann.

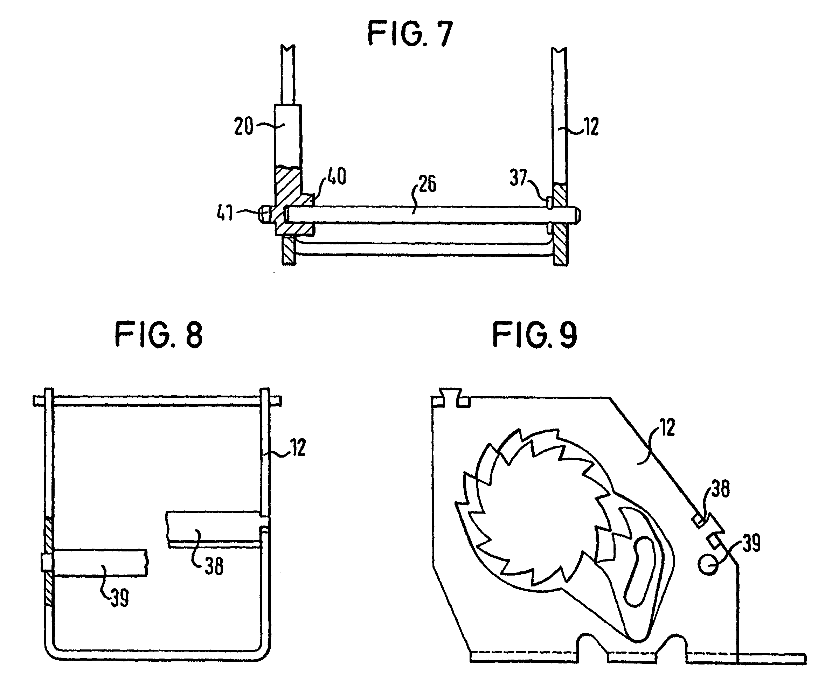

In den Figuren 7 bis 9 ist ein Gurtaufroller gemäß einer dritten Weiterbildung zu sehen. Die Sperrklinke 20 ist mit einem angeformten Zapfen 41 auf ihrer Außenseite versehen, der konzentrisch mit der Bohrung angeordnet ist, in der der Drahtstift 26 aufgenommen ist. Es wird eine einzige Sperrklinke verwendet, und der Drahtstift stützt sich auf der der Sperrklinke 20 gegenüberliegenden Seite des Gehäuses in einer Öffnung ab. Um eine Verschiebung der Sperrklinke bezüglich Figur 7 nach rechts zu verhindern, ist ein Verriegelungsbolzen 37 im Drahtstift 26 vorgesehen. Am Übergang von der Sperrklinke 20 zum Drahtstift 26 ist ein Bund 40 an der Sperrklinke 20 vorgesehen.

Zur Versteifung ist der Rahmen des Gurtaufrollers mit einem Steg 38 versehen, der in der Nähe der Bereiche des Rahmens angeordnet ist, an denen die Sperrklinke unter Last anliegt. Zusätzlich kann ein Stift 39 in Öffnungen des Rahmens angeordnet sein, der die Knickfestigkeit des Rahmens im entsprechenden Bereich erhöht.

## Patentansprüche

1. Gurtaufroller für ein Sicherheitsgurt-Rückhaltesystem, mit einem Rahmen (12), in dem drehbar eine Gurtspule (14) gelagert ist, die an mindestens einem axialen Ende mit einer Sperrverzahnung (16) versehen ist, und mit mindestens einer Sperrklinke (20), die in die Sperrverzahnung der Gurtspule (14) eingesteuert werden kann und an einem Ende einen stiftartigen Lagerzapfen (26) aufweist, wobei die Sperrklinke (20) mit einer Bohrung versehen ist, in der der Lagerzapfen (26) befestigt ist, **dadurch gekennzeichnet, dass** der Lagerzapfen (26) durch einen Drahtstift (26) gebildet ist, auf den die Sperrklinke (20) aufgepresst oder der in die Bohrung eingepresst ist.

2. Gurtaufroller nach Anspruch 1, **dadurch gekennzeichnet, daß** zwei Sperrklinken (20) verwendet werden und daß sich der Drahtstift (26) durchgehend von der einen Sperrklinke (20) zur anderen erstreckt, wobei er über die voneinander abgewandten Außenflächen der Sperrklinken (20) hervorsteht.

3. Gurtaufroller nach einem der vorhergehenden Ansprüche, **dadurch gekennzeichnet, daß** zwei auf einem gemeinsamen Lagerzapfen (21) sitzende Sperrklinken aus unterschiedlichem Material vorgesehen sind.

4. Gurtaufroller nach Anspruch 3, **dadurch gekennzeichnet, daß** eine Sperrklinke aus Leichtmetall besteht.

5. Gurtaufroller nach Anspruch 1, **dadurch gekennzeichnet, daß** eine einzige Sperrklinke (20) verwendet wird, daß die Bohrung eine Durchgangsbohrung ist und daß der Drahtstift (26) über die beiden Außenflächen der Sperrklinke (20) hervorsteht.

6. Gurtaufroller nach Anspruch 1, **dadurch gekennzeichnet, daß** eine einzige Sperrklinke (20) verwendet wird und daß der Drahtstift in eine Öffnung in einem dieser Sperrklinke gegenüberliegenden Teil des Rahmens eingreift.

7. Gurtaufroller nach einem der vorstehenden Ansprüche, **dadurch gekennzeichnet, daß** der Drahtstift (26) im Bereich der Bohrung der Sperrklinke (20) mit axial verlaufenden Rillen versehen ist.

8. Gurtaufroller nach einem der Ansprüche 1 bis 6, **dadurch gekennzeichnet, daß** die Bohrung profiliert ausgebildet ist und der Drahtstift (26) im Bereich der Bohrung mit einem komplementären Profil versehen ist.

9. Gurtaufroller nach einem der vorhergehenden Ansprüche, **dadurch gekennzeichnet, daß** das von der Sperrverzahnung abgewandte Ende der Sperrklinke (20) mit einer Ausnehmung (32) versehen ist, in die ein Steg (34) des Rahmens (12) eingreift.

10. Gurtaufroller nach einem der vorhergehenden Ansprüche, **dadurch gekennzeichnet, daß** auf der Außenseite des Rahmens eine Führungsplatte (28) angeordnet ist, die zusammen mit einem Bund (30), der einen für die Aufnahme des Sicherheitsgurtes vorgesehenen Bereich der Gurtspule (14) von der Sperrverzahnung (16) trennt, die Sperrklinke (20) führt.

11. Gurtaufroller nach einem der vorhergehenden Ansprüche, **dadurch gekennzeichnet, daß** die Sperrklinke (20) mit einem Bund am Übergang von der Sperrklinke zum Drahtstift (26) versehen ist.

12. Gurtaufroller nach einem der vorhergehenden Ansprüche, **dadurch gekennzeichnet, daß** die Sperrklinke (20) ein Profilteil ist.

13. Gurtaufroller nach einem der Ansprüche 1 bis 11, **dadurch gekennzeichnet, daß** die Sperrklinke (20) ein Druckgußteil ist.

## Claims

1. A belt retractor for a safety belt restraint system, comprising a frame (12) in which a belt spool (14) is rotatably mounted, which spool is provided at at least one axial end with a locking toothing (16), and comprising at least one locking catch (20) which can be guided into the locking toothing of the belt spool (14) and has a pin-type bearing pin (26) at one end, the locking catch (20) being provided with a bore in which the bearing pin (26) is secured, **characterized in that** the bearing pin (26) is formed by a wire pin (26) onto which the locking catch (20) is pressed or which is pressed into the bore.

2. The belt retractor according to Claim 1, **characterized in that** two locking catches (20) are used and that the wire pin (26) extends continuously from the one locking catch (20) to the other, the pin projecting over the outer faces, facing away from each other, of the locking catches (20).

3. The belt retractor according to any of the preceding claims, **characterized in that** two locking catches are provided, which are mounted on a common bearing pin (21) and are made of different materials.

4. The belt retractor according to Claim 3, **characterized in that** one locking catch consists of a light metal.

5. The belt retractor according to Claim 1, **characterized in that** a single locking catch (20) is used, that the bore is a through bore and that the wire pin (26) projects over the two outer faces of the locking catch (20).

6. The belt retractor according to Claim 1, **characterized in that** a single locking catch (20) is used and that the wire pin engages into an opening in a part of the frame lying opposite this locking catch.

7. The belt retractor according to any of the preceding claims, **characterized in that** the wire pin (26) is provided with axially extending grooves in the region of the bore of the locking catch (20).

8. The belt retractor according to any of Claims 1 to 6, **characterized in that** the bore is constructed so as to be profiled and the wire pin (26) is provided with a complementary profile in the region of the bore.

9. The belt retractor according to any of the preceding claims, **characterized in that** the end of the locking catch (20), facing away from the locking toothing, is provided with a recess (32) into which a cross-piece (34) of the frame (12) engages.

10. The belt retractor according to any of the preceding claims, **characterized in that** on the exterior of the frame a guide plate (28) is arranged which, together with a collar (30), guides the locking catch (20), which collar separates from the locking toothing (16) a region of the belt spool (14) provided to receive the safety belt.

11. The belt retractor according to any of the preceding claims, **characterized in that** the locking catch (20) is provided with a collar at the transition from the locking catch to the wire pin (26).

12. The belt retractor according to any of the preceding claims, **characterized in that** the locking catch (20) is a profiled part.

13. The belt retractor according to any of Claims 1 to 11, **characterized in that** the locking catch (20) is a diecast part.

## Revendications

1. Enrouleur de ceinture pour un système de retenue à ceinture de sécurité, comportant un cadre (12) dans lequel une bobine de ceinture (14) est montée rotative, laquelle est pourvue d'une denture de blocage (16) à au moins une extrémité axiale, et comportant au moins un cliquet d'arrêt (20) qui peut être guidé dans la denture de blocage (16) de la bobine de ceinture (14) et qui présente à une extrémité un tourillon (26) en forme de pointe, le cliquet d'arrêt (20) étant pourvu d'un perçage dans lequel est fixé le tourillon (26), **caractérisé en ce que** le tourillon (26) est formé par une pointe (26) sur laquelle est pressé le cliquet d'arrêt (20) ou qui est pressée dans le perçage.

2. Enrouleur de ceinture selon la revendication 1, **caractérisé en ce qu'**on utilise deux cliquets d'arrêt (20) et **en ce que** la pointe (26) s'étend de manière continue depuis un cliquet d'arrêt (20) vers l'autre, celle-ci faisant saillie au-delà des surfaces extérieures, détournées l'une de l'autre, des cliquets d'arrêt (20).

3. Enrouleur de ceinture selon l'une des revendications précédentes, **caractérisé en ce qu'**il est prévu deux cliquets d'arrêt en matériau différent logés sur un tourillon (21) commun.

4. Enrouleur de ceinture selon la revendication 3, **caractérisé en ce qu'**un cliquet d'arrêt est en métal léger.

5. Enrouleur de ceinture selon la revendication 1, **caractérisé en ce qu'**on utilise un seul cliquet d'arrêt (20), **en ce que** le perçage est un perçage traversant et **en ce que** la pointe (26) fait saillie au-delà des deux surfaces extérieures du cliquet d'arrêt (20).

6. Enrouleur de ceinture selon la revendication 1, **caractérisé en ce qu'**on utilise un seul cliquet d'arrêt (20) et **en ce que** la pointe s'engage dans une ouverture dans une partie du cadre qui est opposée à ce cliquet d'arrêt.

7. Enrouleur de ceinture selon l'une des revendications précédentes, **caractérisé en ce que** dans la région du perçage du cliquet d'arrêt (20), la pointe (26) est pourvue de rainures s'étendant axialement.

8. Enrouleur de ceinture selon l'une des revendications 1 à 6, **caractérisé en ce que** le perçage est réalisé avec un profil et **en ce que** dans la région du perçage, la pointe (26) est pourvue d'un profil complémentaire.

9. Enrouleur de ceinture selon l'une des revendications précédentes, **caractérisé en ce que** l'extrémité du cliquet d'arrêt (20), qui est détournée de la denture de blocage (20), est pourvue d'un évidement (32) dans lequel s'engage une traverse (34) du cadre (12).

10. Enrouleur de ceinture selon l'une des revendications précédentes, **caractérisé en ce que** sur la face extérieure du cadre est agencée une plaque de guidage (28) qui guide le cliquet d'arrêt (20) conjointement avec un collet (30) qui sépare de la denture de blocage (16) une région de la bobine de ceinture (14) prévue pour recevoir la ceinture de sécurité.

11. Enrouleur de ceinture selon l'une des revendications précédentes, **caractérisé en ce que** le cliquet d'arrêt (20) est pourvu d'un collet au passage du cliquet d'arrêt vers la pointe (26).

12. Enrouleur de ceinture selon l'une des revendications précédentes, **caractérisé en ce que** le cliquet d'arrêt (20) est une pièce profilée.

13. Enrouleur de ceinture selon l'une des revendications 1 à 11, **caractérisé en ce que** le cliquet d'arrêt (20) est une pièce moulée sous pression.
